# EUROPEAN PATENT APPLICATION

(11) **EP 2 259 581 A2**
(43) Date of publication of application: **08.12.2010**
(21) Application number: 10010224.3
(22) Date of filing: 04.12.2001
(51) Int. Cl.: H04N 5/76

(54) **Method and apparatus for recording and searching audio/video signal**

(30) Priority: 26.06.2001 KR 20010036582
(62) Divisional of application: 01128421.3
(71) Applicant: Samsung Electronics Co., Ltd., Suwon-si, Gyeonggi-do 442-742 (KR)
(72) Inventor: Cho, Chang-hyung, Gangnam-gu Seoul (KR)
(74) Representative: Grünecker, Kinkeldey, Stockmair & Schwanhäusser Anwaltssozietät

(57) **Abstract**

A method and apparatus for extracting a category item from an audio/video (A/V) signal to be recorded on a storage medium, storing the extracted category item, and searching for the AN signal using the category item are provided. The method of recording an A/V signal includes the steps of seizing the category of the A/V signal and selecting a category item for the A/V signal, storing category information about the A/V signal, the category information including the category item, and recording the A/V signal to a storage medium. Accordingly, an A/V signal stored in a storage medium can be searched for by a category so that the A/V signal can be easily searched for. Since the compression ratio of each A/V signal is controlled depending on its category when the A/S signal is recorded to a storage medium, the storage capacity of the storage medium can be efficiently managed.

## Description

The present invention relates to a method and apparatus for recording and searching an audio/video (AN) signal, and more particularly, to a method and apparatus for easily searching an AN signal recorded on a storage medium such as a hard disc and efficiently managing a storage capacity.

Representative apparatuses for recording an input A/V signal on a storage medium such as a hard disc and searching an AN signal recorded to a storage medium are apparatuses such as personal video recorders (PVRs) provided with a time-shift function and a search function and digital video recorders (DVRs).

However, these apparatuses are designed to record an input A/V signal on a storage medium in the form of a file. Accordingly, it takes a long time for the apparatuses to search an AN signal when a large amount of AN signal is recorded on a storage medium.

Moreover, when recording an input AN signal on a storage medium, the apparatuses compress the AN signal in order to efficiently manage the storage capacity of the storage medium. However, the apparatuses compress an AN signal at a fixed compression ratio regardless of the type of A/V signal so that they cannot efficiently manage the storage capacity of the storage medium.

To solve the above-described problems, it is the object of the present invention to provide a method and apparatus for extracting a category item from an audio/video (AN) signal to be recorded to a storage medium, storing the extracted category item, and searching for the AN signal using the category item.

According to an aspect of the present invention there is provided a method and apparatus for compressing an AN signal at a compression ratio determined based on the category item of the AN signal when recording the A/V signal to a storage medium.

To achieve the object of the invention, there is provided a method of recording an AN signal. The method includes the steps of selecting a category item for the A/V signal; storing category information about the AN signal, the category information including the category item; and recording the AN signal to a storage medium.

Preferably, the category item selecting step includes the sub-steps of extracting feature information which the category of the AN signal can be seized based on; comparing the feature information with a predetermined category list; and selecting the category item for the AN signal based on the result of comparison.

It is preferable that the AN signal recording step includes the sub-steps of determining a compression ratio for the A/V signal according to the category item selected for the AN signal; and recording the AN signal, which is compressed at the compression ratio, to the storage medium.

Preferably, the category item is selected by a user. Preferably, the method further includes a step of allowing a user to add a category item.

To achieve the object of the invention, there is further provided a method of searching a storage medium, which stores one or more A/V signals, for an AN signal. The method includes the steps of when a search for the AN signal is requested, displaying a category list with respect to the one or more A/V signals stored in the storage medium; when a category item to be searched for is selected from the displayed category list, displaying a list of AN signals falling under the category item; and when an AN signal is selected from the list of A/V signals, read the selected AN signal from the storage medium and displaying the AN signal.

There is also provided an apparatus for recording an AN signal, including a first storage medium for storing one or more AN signals; a demultiplexing processor for demultiplexing an input A/V signal, extracting feature information which the category of the AN signal can be seized based on, and transmitting the AN signal to the first storage medium; a controller for selecting and storing a category item for the input AN signal based on the feature information provided from the demultiplexing processor and controlling the demultiplexing processor to record the input A/V signal to the first storage medium; and a second storage medium for storing category information including the category item.

According to an aspect of the invention, the controller determines a compression ratio for the input AN signal according to the category item and provides information on the determined compression ratio to the demultiplexing processor, and the demultiplexing processor compresses the input AN signal at the compression ratio and transmits the compressed AN signal to the first storage medium.

To achieve the object of the invention, there is further provided an apparatus for searching a first storage medium, which stores one or more AN signals, for an A/V signal. The apparatus includes an information input unit for inputting information as to a request of searching for an AN signal stored in the first storage medium; a second storage medium for storing category information including a category list with respect to the one or more AN signals stored in the first storage medium; a display unit for displaying the category list; and a controller for reading the category list from the second storage medium and controlling the category list to be displayed on the display unit when the search request information is received from the information input unit, and when an AN signal falling under a particular category item is selected from the displayed category list through the information input unit, reading the selected AN signal from the first storage medium.

The above object and advantages of the present invention will become more apparent by describing in detail preferred embodiments thereof with reference to the attached drawings in which:
FIG. 1 is a block diagram of an audio/video (AN) signal recording and searching apparatus according to an embodiment of the present invention;
FIG. 2 is an example of an image provided when an AN signal is searched for according to the present invention;
FIG. 3 is a flowchart of a method of recording an A/V signal according to an embodiment of the present invention; and
FIG. 4 is a flowchart of a method of searching for an A/V signal according to an embodiment of the present invention.

Hereinafter, embodiments of the present invention will be described in detail with reference to the attached drawings.

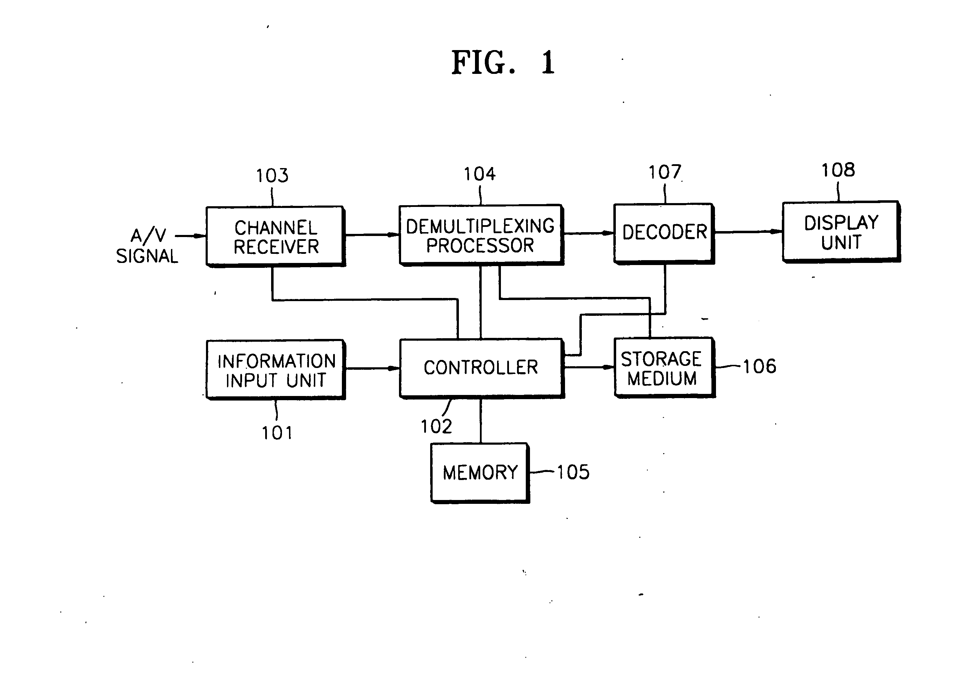

Referring to FIG. 1, an audio/video (A/V) signal recording and searching apparatus includes an information input unit 101, a controller 102, a channel receiver 103, a demultiplexing processor 104, a memory 105, a storage medium 106, a decoder 107, and a display unit 108.

The information input unit 101 allows information necessary for operating the A/V signal recording and searching apparatus of the present invention to be input to the apparatus, and is realized as a remote controller or a key input unit on the front panel of the apparatus. Accordingly, a user can input the receiving channel information of an A/V signal to be stored (or recorded) on the storage medium 106, search request information, selection information of an A/V signal to be searched for, etc., through the information input unit 101. In other words, the user can input information which a particular category of an A/V signal to be stored is selected based on or add a category item using the information input unit 101.

The controller 102 controls the channel receiver 103 to receive an A/V signal through a corresponding channel when receiving channel information is received through the information input unit 101. Accordingly, the channel receiver 103 converts the received A/V signal into a digital signal which can be used by the A/V signal recording and searching apparatus according to the present invention. The A/V signal may be a satellite broadcast program, a cable television broadcast program, or an over-the-air broadcast program. The digital signal output from the channel receiver 103 is transmitted to the demultiplexing processor 104.

The demultiplexing processor 104 parses system information (SI) contained in the received A/V signal, or additional information which is not contained in the received A/V signal but is received together with the A/V signal. The SI includes extended text table (ETT) information, extended channel name descriptor (ECND) information, and network text table information provided from a Program and System Information Protocol (PSIP) or Out-Of-Band System Information (OOBSI). The SI contains feature information which the category of the received A/V signal can be seized based on. Like the SI, the additional information also contains feature information which the category of the received A/V signal can be seized based on. The SI is mostly used when the receive A/V signal is a digital signal, and the additional information is mostly used when the received A/V signal is an analog signal such as an over-the-air broadcast program.

After parsing the SI or additional information, the demultiplexing processor 104 extracts and provides the feature information to the controller 102 compares the feature information with a predetermined category list to select a category item for the received A/V signal. The category list is composed of category items selected based on the types of A/V signals which may be input to the A/V signal recording and searching apparatus. For example, when AN signals which may be input to the apparatus are categorized into news, drama and documentary, the category list is composed of category item information about the news, category item information about the drama, and category item information about the documentary.

Once the category item is selected, the controller 102 determines a compression ratio according to the selected category item. In other words, when it is estimated from the category item that the amount of movement in the received AN signal is greater than a reference amount of movement, the controller 102 determines the compression ratio to be lower than a reference compression ratio. In contrast, when it is estimated that the amount of movement in the received AN signal is less than the reference amount of movement, the controller 102 determines the compression ratio to be higher than the reference compression ratio. The determined compression ratio is sent to the demultiplexing processor 104.

Here, the controller 102 stores category information including the selected category item in the memory 105. The category information includes the name of the program and the date and time when the program is received, and can be used for searching for the AN signal after being recorded to the storage medium 106. Accordingly, the memory 105 stores category information including the category items of all AN signals recorded to the storage medium 106 so that the category information can be read by the controller 102, thereby providing the category list composed of the category information for a user. Once an AN signal to be reproduced is selected from the category list, the controller 102 controls a read mode so that the selected AN signal can be transmitted from the storage medium 106 to the demultiplexing processor 104. At least one A/V signal can be stored in the storage medium 106.

In a recording mode, the demultiplexing processor 104 compresses a received AN signal at a compression ratio provided from the controller 102 and records the received AN signal to the storage medium 106. In a search mode, the demultiplexing processor 104 reads an AN signal corresponding to category information provided from the controller 102 from the storage medium 106 and transmits the A/V signal to the decoder 107. In a normal playback mode, the demultiplexing processor 104 transmits a received A/V signal to the decoder 107.

The decoder 107 decodes a received AN signal to be displayed. A conventional decoding method is used.

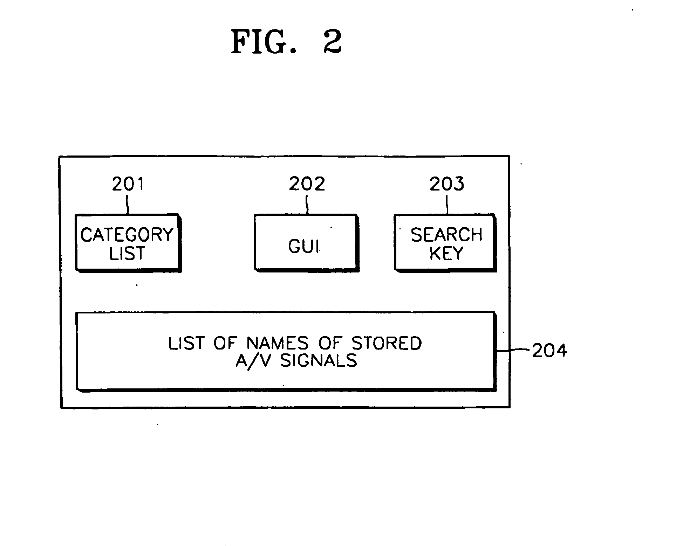

The display unit 108 displays a received A/V signal, an A/V signal reproduced from the storage medium, or information used for searching. The information for searching may include a category list 201, a graphic user interface (GUI) 202 through which a desired category item can be input, a search key 203, and the list 204 of the names of A/V signals stored in the storage medium 106, as shown in FIG. 2.

In the A/V recording and searching apparatus shown in FIG. 1, both the display unit 108 and the storage medium 106 or only the display unit 108 can be realized as an external set-top box. The storage medium 106 can be realized as a hard disc.

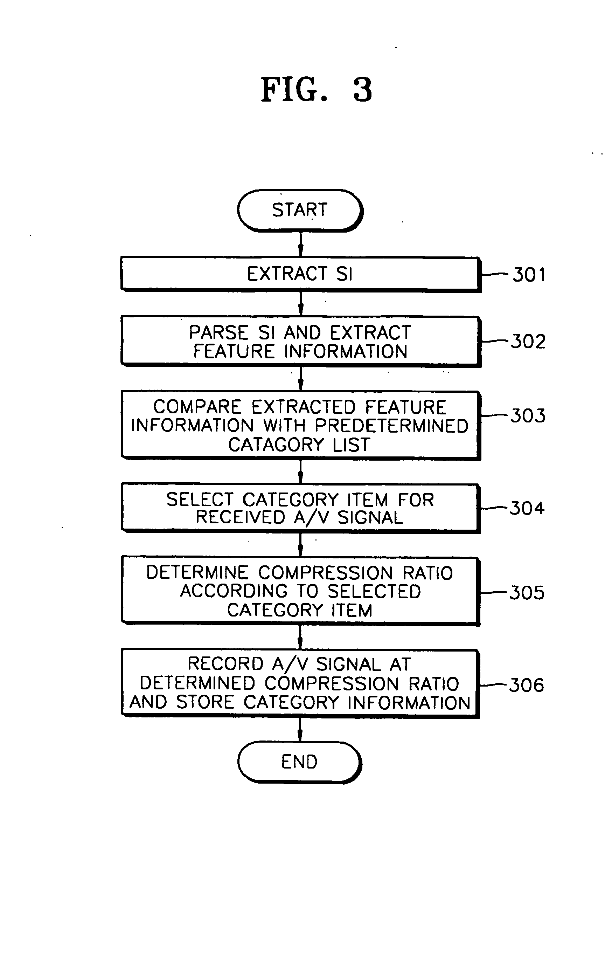

FIG. 3 is a flowchart of a method of recording an A/V signal according to an embodiment of the present invention. A method of recording an A/V signal according to the present invention will be described with reference to FIG. 3.

Once an A/V signal is received, SI is extracted from the received A/V signal in step 301. The SI has been described in FIG. 1. Thereafter, in step 302, the extracted SI is parsed, and feature information which the category of the received A/V signal can be seized based on is extracted from the SI.

The extracted feature information is compared with a predetermined category list in step 303. The predetermined category list is the same as that which has been described referring to the controller 102 described in FIG. 1.

In step 304, a category item for the A/V signal is selected based on the result of comparison performed in step 303. For example, when the received A/V signal is a "dramatic series", a category item corresponding to the "dramatic series" is selected.

Next in step 305, a compression ratio is determined according to the selected category item. A method of determining the compression ratio has been described referring the controller 102 of FIG. 1. After the compression ratio is determined, the A/V signal is compressed at the determined compression ratio and recorded on the storage medium 106, and category information is stored in the memory 105, in step 306. The category information stored in the memory 105 has been described referring to the description of FIG. 1 above. Once the A/V signal is completely recorded on the storage medium 106, the entire recording operation ends.

FIG. 3 shows the case in which the category of a received A/V signal can be recognized based on SI contained in the received A/V signal. However, the method shown in FIG. 3 can be applied to the case in which the category of a received AN signal can be recognized based on additional information received together with the AN signal. In other words, instead of SI, additional information can be used in FIG. 3. The additional information is received through the same channel or a different channel than the AN signal, as described in FIG. 1.

In addition, the category information is stored in the memory 105 in FIG. 3 but can be stored in the storage medium together with the corresponding AN signal. In other words, the category information can be stored at a header area for the AN signal in the storage medium 106. The received AN signal is automatically recorded on the storage medium 106 based on the received information in FIG. 3, but only an AN signal falling under a category that is selected by a user can be recorded on the storage medium 106. In addition, a category item for a received AN signal can be added by a user when the AN signal is recorded to the storage medium 106.

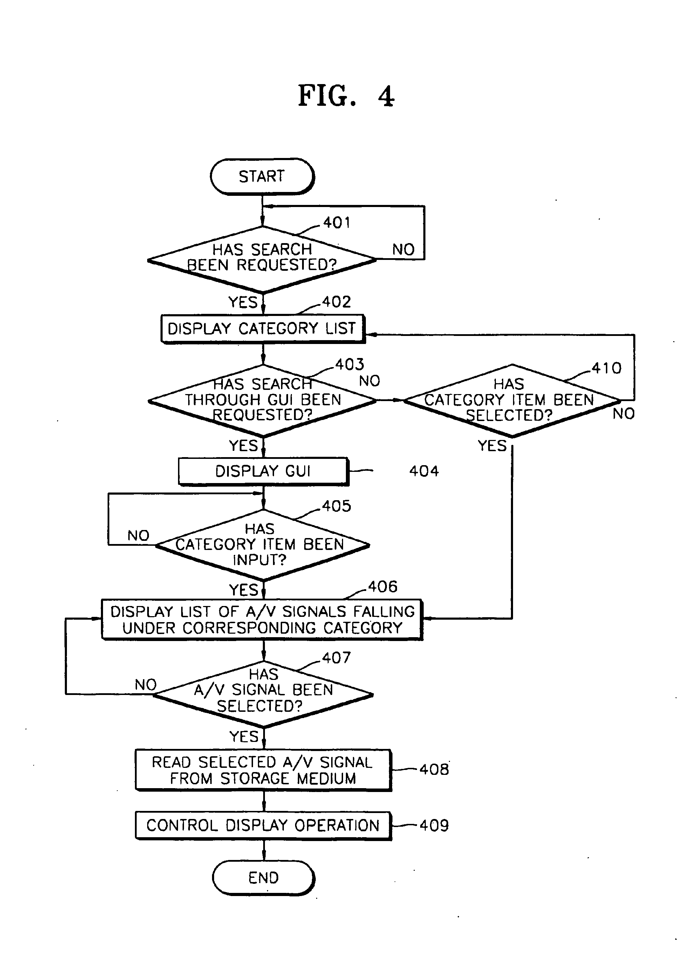

FIG. 4 is a flowchart of a method of searching for an A/V signal according to the present invention. A method of searching for an AN signal according to the present invention will be described with reference to FIG. 4.

Once a search is requested through the information input unit 101 in step 401, a category list is displayed in step 402. In other words, when category information is stored in the memory 105, the controller 102 reads all the category information stored in the memory 105, forms a category list, and transmits the category list to the display unit 108 through the demultiplexing processor 104 and the decoder 107 so that the category list which can be recognized by a user can be displayed. The category list can be displayed on the portion 201 of a screen, as shown in FIG. 2, but can be displayed on the entire screen. When category information is stored in the storage medium 106, the controller 102 collects the category information stored at header areas in areas in which individual AN signals are stored in the storage medium 106 and forms a category list.

When it is determined that a search through a GUI is requested through the information input unit 101, as a result of checking in step 403, under a state in which the category list is displayed, the controller 102 controls the demultiplexing processor 104 and the decoder 107 so that a GUI having a search function can be displayed on the display unit 108 in step 404. Accordingly, the GUI 202 is displayed on the display unit 108, as shown in FIG. 2.

Once a category item to be searched for is input through the GUI 202 displayed on the display unit 108 in step 405, the controller 102 displays a list of A/V signals falling under the category item in step 406. For example, when a category item corresponding to a "dramatic series" in step 405, the controller 102 displays a list of all A/V signals falling under the "dramatic series" in step 406. Here, the displayed list is information based on category information stored in the memory 105 or the storage medium 106, for example, information composed of the list 204 of the names of stored AN signals, as shown in FIG. 2.

Once a user selects an AN signal to be searched for from the displayed list of AN signals through the information input unit 101 in step 407, the controller 102 reads the selected AN signal from the storage medium 106 in step 408. In step 409, the controller 102 controls the read AN signal to be transmitted to the display unit 108 through the demultiplexing processor 104 and the decoder 107, thereby displaying the AN signal.

Meanwhile, when a search through a GUI is not requested in step 403, and the user selects a category item from the category list that is being displayed in step 410, the operation goes to step 406, in which a list of AN signals falling under the selected category item is displayed as described above.

In FIG. 4 showing a method of searching for an A/V signal, a category item to be searched for is selected from a displayed category list and a list of AN signals falling under the selected category item, or a category item to be searched for is input through a GUI. However, to search a desired AN signal, a category item for at least one AN signal stored in the storage medium 106 and a list of at least one AN signal falling under the category item can be displayed.

According to the present invention, the category information of an AN signal is stored when the AN signal is recorded on a storage medium so that the AN signal stored in the storage medium can be searched for by category, thereby allowing a user to easily search for a desired A/V signal even if many AN signals are stored in the storage medium. In addition, when an input A/V signal is recorded to a storage medium, the AN signal is compressed at a compression ratio which is determined according to the category of the AN signal so that the storage capacity of the storage medium can be more efficiently managed in the present invention than in the prior art.

While this invention has been particularly shown and described with reference to preferred embodiments thereof, it will be understood by those skilled in the art that various changes in form and details may be made therein. Therefore, the true scope of the invention will be defined by the appended claims.

**The following is a list of further preferred embodiments of the invention:**
Embodiment 1: A method of recording an audio/video (A/V) signal, comprising the steps of:
   selecting a category item for the AN signal;
   storing category information about the A/V signal, the category information including the category item; and
   recording the A/V signal to a storage medium.
Embodiment 2: The method of embodiment 1, wherein the category information is stored in a memory provided separately from the storage medium or in the storage medium together with the A/V signal.
Embodiment 3: The method of embodiment 1 or 2, wherein the category item selecting step comprises the sub-steps of:
   extracting feature information which the category of the A/V signal can be seized based on;
   comparing the feature information with a predetermined category list; and
   selecting the category item for the A/V signal based on the result of comparison.
Embodiment 4: The method of one of the embodiments 1 to 3, wherein the A/V signal recording step comprises the sub-steps of:
   determining a compression ratio for the A/V signal according to the category item selected for the A/V signal; and
   recording the A/V signal, which is compressed at the compression ratio, to the storage medium.
Embodiment 5: The method of one of the embodiments 1 to 4, wherein the category item is selected by a user.
Embodiment 6: The method of one of the embodiments 1 to 5, further comprising a step of allowing a user to add a category item.
Embodiment 7: A method of searching a storage medium, which stores one or more audio/video (A/V) signals, for an A/V signal, the method comprising the steps of:
   when a search for the A/V signal is requested, displaying a category item for at least one A/V signal stored in the storage medium and a list of at least one A/V signal falling under the category item; and
   when an A/V signal to be searched for is selected from the displayed category item and A/V signal list, searching the storage medium for the selected A/V signal.
Embodiment 8: The method of embodiment 7, wherein the step of displaying a category item comprises displaying a category list with respect to the one or more A/V signals stored in the storage medium;
   selecting a category item from the displayed category list, and
   the step of searching the storage medium comprises reading the selected AN signal from the storage medium and displaying the A/V signal.
Embodiment 9: The method of embodiment 7, wherein the step of displaying a category item comprises that a user inputs a category item to be searched for through a graphic user interface.
Embodiment 10: An apparatus for recording an audio/video (A/V) signal, comprising:
   a first storage medium for storing one or more A/V signals;
   a demultiplexing processor for demultiplexing an input A/V signal, extracting feature information which the category of the A/V signal can be seized based on, and transmitting the A/V signal to the first storage medium;
   a controller for selecting and storing a category item for the input A/V signal based on the feature information provided from the demultiplexing processor and controlling the demultiplexing processor to record the input A/V signal to the first storage medium; and
   a second storage medium for storing category information including the category item.
Embodiment 11: The apparatus of embodiment 10, wherein the controller determines a compression ratio for the input A/V signal according to the category item and provides information on the determined compression ratio to the demultiplexing processor, and the demultiplexing processor compresses the input A/V signal at the compression ratio and transmits the compressed A/V signal to the first storage medium.
Embodiment 12: An apparatus for searching a first storage medium, which stores one or more audio/video (A/V) signals, for an A/V signal, the apparatus comprising:
   an information input unit for inputting information as to a request of searching for an A/V signal stored in the first storage medium;
   a second storage medium for storing category information including a category list with respect to the one or more A/V signals stored in the first storage medium;
   a display unit for displaying the category list; and
   a controller for reading the category list from the second storage medium and controlling the category list to be displayed on the display unit when the search request information is received from the information input unit, and when an AN signal falling under a particular category item is selected from the displayed category list through the information input unit, reading the selected A/V signal from the first storage medium.

## Claims

1. A method comprising:
receiving a digital television signal and auxiliary information which is not included in the digital television signal;
determining category information based on the received auxiliary information; and
searching the digital television signal based on the determined category information.

2. The method of claim 1, wherein the auxiliary information and digital television signal are respectively received by different channels.

3. The method of claim 2, wherein the category information includes program title.

4. The method of claim 3, wherein compression ratio is determined based on the category information and the received digital television signal is stored in accordance with the determined compression ratio.
